# EUROPEAN PATENT APPLICATION

(11) **EP 1 742 320 A2**
(43) Date of publication of application: **10.01.2007**
(21) Application number: 06014170.2
(22) Date of filing: 07.07.2006
(51) Int. Cl.: H02J 1/12

(54) **DC power source**

(30) Priority: 08.07.2005 JP 2005199974
(71) Applicant: YAMAHA HATSUDOKI KABUSHIKI KAISHA, Iwata-shi, Shizuoka-ken 438-8501 (JP)
(72) Inventor: Kurosawa, Atsushi, Iwata Shi Shizuoka-ken 438-8501 (JP)
(74) Representative: Grünecker, Kinkeldey, Stockmair & Schwanhäusser Anwaltssozietät

(57) **Abstract**

The present invention refers to a DC power source comprising a pair of terminals for outputting electric power; a first cell and a second cell connected to the pair of terminals in parallel; and an insulation type DC-DC converter connected to either one of the first cell or the second cell in series.

## Description

The present invention relates to a DC power source including insulation type converters and a plurality of cells.

Recently, fuel cells generating by an electrochemical reaction between hydrogen and oxygen have public attention as power source good at operation efficiency and environmental friendliness. Fuel cell is able to output desired power by controlling an amount of fuel gas supply, but a response of output power may delay due to a response delay of gas supply amount.

As a means for preventing such a disadvantage, technology of configuring a power source by connecting a fuel cell and a secondary cell in parallel is suggested. For example, in the technology according to JP-A-2000-12059, a combined use of a secondary cell and fuel cell is attempted by converting an output voltage of a fuel cell with a DC-DC converter.

In such a present circumstance, further improvement of power output efficiency is required, and the inventions related to DC power source including such fuel cell and secondary cell is the one according to JP-A-2002-118981. In JP-A-2002-118981, "a DC power source comprising: a pair of terminals for outputting power, a fuel cell connected to the terminals, a secondary cell capable of charge and discharge, and a DC-DC converter, in which the secondary cell is connected to the terminals through the DC-DC converter in parallel with the fuel cell" is described.

According to document "usually, power loss occurs in voltage conversions in a DC-DC converter. In the present invention, a DC-DC converter is provided to the side of a secondary cell, so power loss of output from a fuel cell can be prevented. In a power source with a combined use of fuel cell and secondary cell, a case that power is supplied mainly from a fuel cell is usual. Thus, by preventing loss at a fuel cell of a frequent use, output efficiency of entire power source can be improved. In the view that use of a fuel cell is frequent, the present invention is especially effective in the case a maximum output of a fuel cell is larger than a maximum output of a secondary cell".

However, according to JP-A-2002-118981, a DC-DC converter is connected to a pair of terminals in parallel (See FIG. 1 of JP-A-2002-118981). Due to this, output voltage of the DC-DC converter becomes larger, and output power of the DC-DC converter also becomes larger in a DC power source. Thus, an amount of power loss lost as heat and so forth becomes large in converting power of a secondary cell at the DC-DC converter.

A description about a DC power source according to JP-A-2002-118981 will be made further below. FIG. 7 is an explanation view illustrating a configuration that a conventional DC power source is connected to a motor through an inverter, and also a Figure simplifying the FIG. 1 of JP-A-2002-118981. In a DC power source 100 is connected to a secondary cell 12 through a DC-DC converter 13 with a fuel cell 11 connected to a pair of terminals 100a and 100b. A motor 15 configuring a part of "drive unit" is connected to the DC power source 100 through an inverter 14.

Hypothetically, it is desired that the efficiency of the DC-DC converter 13 in the DC-power source 100 is 100%, the DC power source 100 provides, for example, a voltage of 48V and a current of 80A to the inverter 14, and approximately 4kW power produced by this is inverted and output to the motor 15. To make it, the fuel cell 11 needs to produce approximately 1 kW power with a voltage of 48V and current of 20A, the secondary cell needs to produce approximately 3kW power with a voltage of 36V and current of 85A, the voltage is converted by the DC-DC converter 13 so that the voltage, current and power of the secondary cell 12 are output to DC-DC converter 13 as electric power of approximately 3kW with a voltage of 48V and current of 60A.

However, eventually, the efficiency of the DC-DC converter 13 cannot be 100%. For example, if the efficiency of the DC-DC converter 13 is 80%, the necessary power supply for the DC-DC converter 13 to output 3kW is 3.75kW, and approximately 750w becomes power loss. Therefore, the output of 3.75kW is necessary to cover the power loss at the DC-DC converter 13 by the output voltage of the secondary cell. Thus, it is desired that such approximately 750w power loss at the DC-DC converter 13 are reduced as much as possible, and the motor 15 can drive efficiently.

According to this circumstance, the object of the present invention is to provide a DC power source such that power loss at an insulation type DC-DC converter can be reduced in a DC power source including an insulation type DC-DC converter and a plurality of cells.

This objective is solved in an inventive manner by a DC power source comprising a pair of terminals for outputting electric power, a first cell and a second cell, which are connected to the pair of terminals in parallel, and an insulation type DC-DC converter connected to either one of the first cell or the second cell in series.

Preferably, the insulation type DC-DC converter is connected to either cell between the first and second cells having the lower current.

Further preferably, the first cell is a fuel cell and the second cell is a secondary cell.

Alternatively, the first cell may be an engine driven type generator and the second cell may be a secondary cell.

According to another embodiment, the DC power source further comprises a pair of terminals for outputting electric power, a fuel cell, a secondary cell, and an engine driven type generator, which are connected to the pair of terminals all in parallel, and two insulation type DC-DC converters being individually connected to any two out of the fuel cell, the secondary cell or the engine driven type generator in series.

Preferably, the insulation type DC-DC converters are individually connected to the fuel cell and the engine driven type generator having the lower current compared to the secondary cell.

Further, there is provided a drive unit connected to the afore-discussed DC power source via an inverter.

In the following, the present invention is explained in greater detail with respect to several embodiments thereof, in conjunction with the accompanying drawings, wherein:
- FIG. 1: is an explanation view illustrating a configuration that a DC power source of embodiment 1 is connected to a motor through an inverter,
- FIG. 2: is an explanation view illustrating a configuration that a DC power source of embodiment 2 is connected to a motor through an inverter,
- FIG. 3: is an explanation view illustrating a configuration that a DC power source of embodiment 3 is connected to a motor through an inverter,
- FIG. 4: is an explanation view illustrating a configuration that a DC power source of embodiment 4 is connected to a motor through an inverter,
- FIG. 5: is an explanation view illustrating a configuration that a DC power source of embodiment 5 is connected to a motor through an inverter,
- FIG. 6: is an explanation view illustrating a configuration that a DC power source of embodiment 6 is connected to a motor through an inverter, and
- FIG. 7: is an explanation view illustrating a configuration wherein a conventional DC power source is connected to a motor through an inverter.

### Descriptions of Reference Numerals and Symbols

- 1, 10, 50, 60, 70, 80: DC power source
- 1a,1b,10a,10b,50a,50b,60a,60b,70a,70b,80a,80b,100a,100b: a pair of terminals
- 11: fuel cell (first cell) (second cell)
- 12: secondary cell (first cell) (second cell)
- 13: insulation type DC-DC converter
- 14: inverter
- 15: motor (Drive or a part of drive)
- 16: CPU
- 61: engine driven type generator (first cell) (second cell)
- 81: insulation type DC-DC converter

### Embodiment 1

Hereinafter, embodiment 1 will be described.

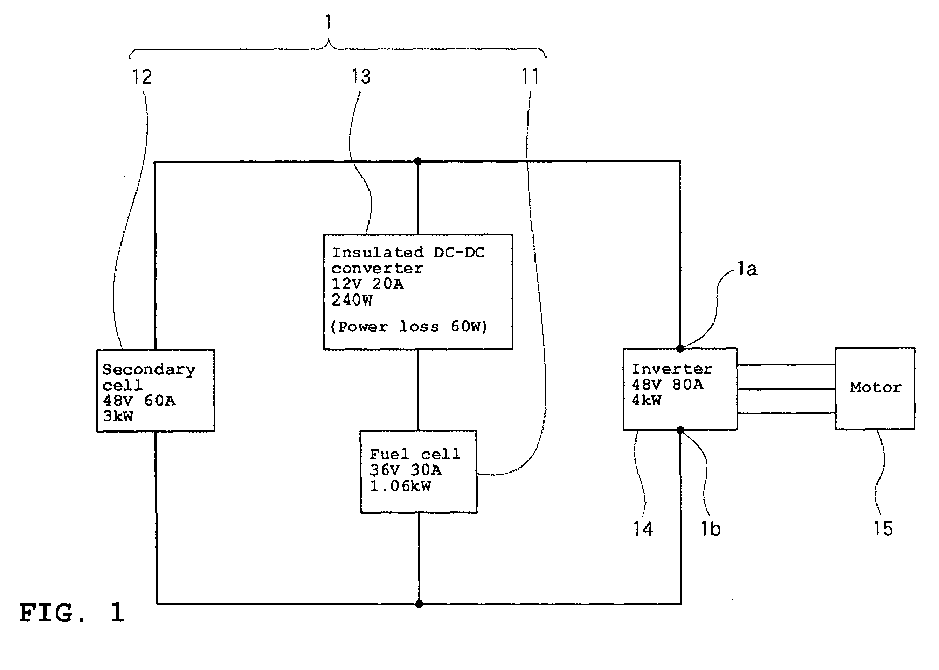

FIG. 1 shows the embodiment 1.

First, a DC power source 1 in embodiment 1 will be described. The DC power source 1 includes, as shown in FIG. 1, a pair of terminals 1 a and 1 b for outputting electric power, a fuel cell 11 that is a "first cell", a secondary cell 12 that is a "second cell" connected to the pair of terminals 1 a and 1b in parallel, and insulation type DC-DC converter 13 connected to the fuel cell 11 in series. Also, this DC power source 1 is connected to a motor 15 for configuring a drive unit or a part of the drive unit through an inverter 14.

Hypothetically, it is desired that the efficiency of the insulation type DC-DC converter 13 is 100% in this DC power source 1, and the DC power source 1 provides, for example, a voltage of 48V and a current of 80A at the inverter 14, and approximately 4kW power produced thereby is inverted and output to the motor 15.

In this case, it can be assumed that approximately 1 kW power is output with a voltage of 36V and a current of 30A at the fuel cell 11, approximately 1 kW power is produced with a voltage 48V and a current 20A as a total power of the fuel cell 11 and the insulation type DC-DC converter 13. Approximately 3kW power is output with a voltage of 48V and a current of 60A at the secondary cell 12.

Thus, the output of approximately 4kW at the inverter 14 is the sum of approximately 1 kW power produced at the insulation type DC-DC converter 13 and the fuel cell 11, and approximately 3kW power produced at the secondary cell 12.

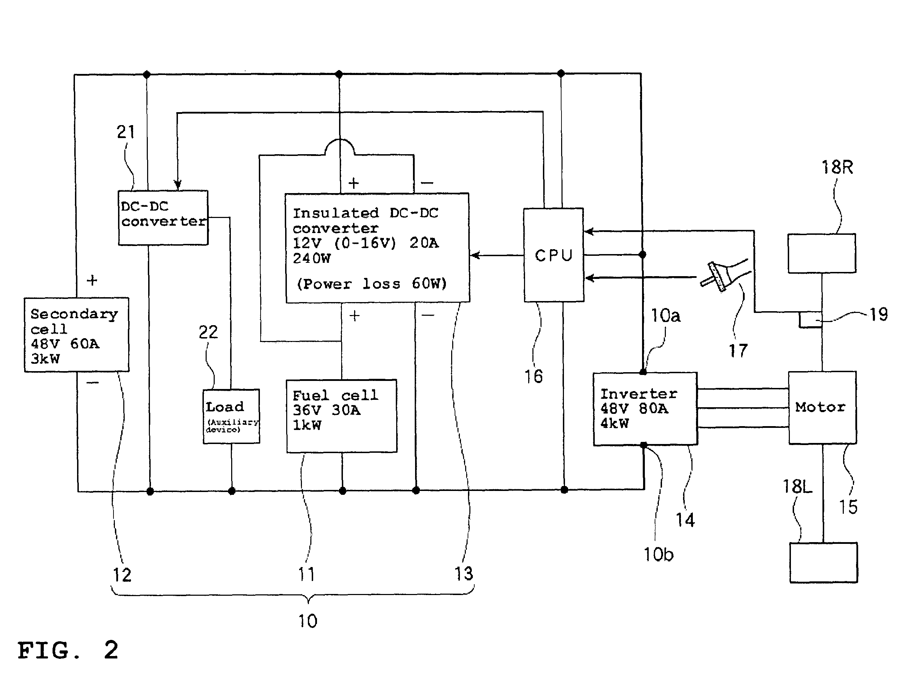

Further, although not illustrated in FIG. 1, a current 30A flowing at the fuel cell 11 is divided into a current 10A flowing in to the input side of the DC-DC converter 13, and a current 20A flowing in to the output side of the DC-DC converter 13 (See FIG. 2).

However, eventually, the efficiency of the insulation type DC-DC converter 13 cannot be 100%. For example, if the efficiency of the insulation type DC-DC converter 13 is 80%, the necessary power supply is 300W for the insulation type DC-DC converter 13 to output 240W, and thus the power loss is 60W. Therefore, to cover the power loss at the DC-DC converter 13 by an output power of the fuel cell 11, approximately 1.06kW power needs to be output.

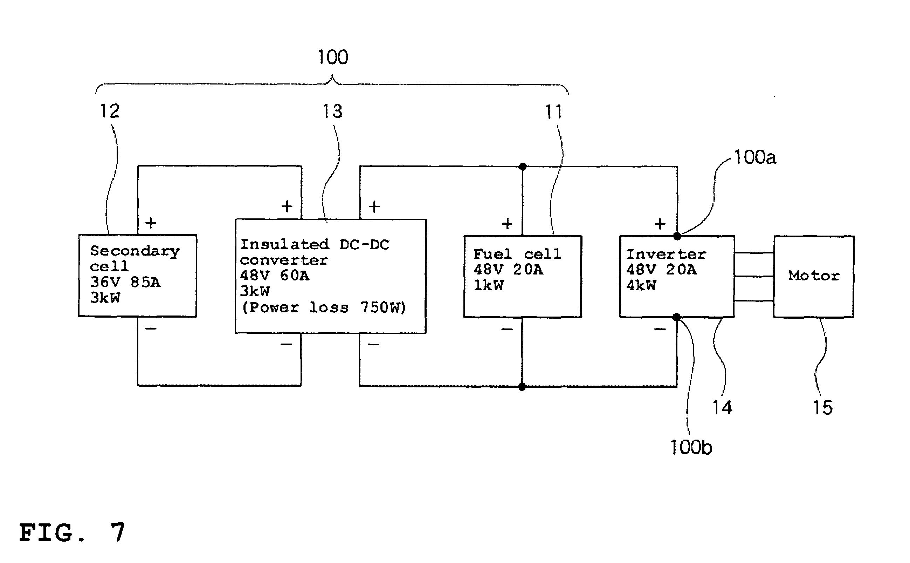

Thus, in the DC power source 100, as shown in FIG. 7, approximately 3.75kW at the secondary cell 12 and approximately 1 kW at the fuel cell 11, approximately 4.75kW in total, need to be output to supplement the power loss of 750W at the insulation type DC-DC converter 13 in order to supply an electric power of approximately 4kW to the inverter 14. On the other hand, in the DC power source 1, as shown in FIG. 1, production of approximately 1.06kW at the fuel cell 11 and approximately 3kW at the secondary cell 12, an electric power of approximately 4.06kW in total, is enough to supplement the power loss of 60W at the insulation type DC-DC converter 13 in order to supply an electric power of approximately 4kW to the inverter 14.

Such the DC power source 1 is includes the pair of terminals 1 a and 1b for outputting electric power, the fuel cell 11 and the secondary cell 12 connected to the pair of terminals 1 a and 1 b in parallel, and the insulation type DC-DC converter 13 connected to the fuel cell 11 in series. Therefore, because a voltage output by the insulation type DC-DC converter 13 can be made low, output power can be made small. Thus, a power loss at insulation type DC-DC converter 13 is reduced.

Also, the power efficiency that a power produced at the fuel cell 11 and the secondary cell 12 is supplied to the motor 15 becomes high. Thus, the output efficiency of the DC power source 1 with a combined use of the fuel cell 11 and the secondary cell 12 is improved.

The insulation type DC-DC converter 13 is connected to either cell 11 or 12 with a lower voltage between the fuel cell 11 and the secondary cell 12 in series. In the insulation type DC-DC converter 13, the voltage is variable for adding a voltage produced at either cell 11 or 12 with a lower voltage between the fuel cell 11 and the secondary cell 12. For example, in the DC power source 1, a voltage at the fuel cell 11 is 36V and a voltage at the secondary cell 12 is 48V, so the voltages need to be the same in the case the cells 11 and 12 are connected in parallel. Therefore, the insulation type DC-DC converter 13 is connected to the fuel cell 11 with a lower voltage in series, a voltage of 36V at the fuel cell 11 and a voltage of 12V at the insulation type DC-DC converter 13 are summed to be 48V, and matched with a voltage of 48V at the secondary cell 12. With such a connection, an output voltage of the insulation type DC-DC converter 13 is smaller than a voltage applied to the pair of terminals 1 a and 1 b for outputting electric power, a voltage to be converted becomes smaller, and power loss is reduced.

The insulation type DC-DC converter 13 is connected to either cell with a lower current between the fuel cell 11 and the secondary cell 12 in series. It is because a connection to the cell 11 or 12 with a lower current reduces the voltage converted by the insulation type DC-DC converter 13 and also reduces power loss. For example, in the DC power source 1, because a current of 30A at the fuel cell 11 is smaller than a current of 60A at the secondary cell 12, the insulation type DC-DC converter 13 is connected to the fuel cell 11 in series.

### Embodiment 2

Hereinafter, the embodiment 2 will be described.

FIG. 2 shows the embodiment 2.

A DC power source 10 includes a pair of terminals 10a and 10b, a fuel cell 11 and a secondary cell 12 connected to the pair of terminals 10a and 10b in parallel, an insulation type DC-DC converter 13 connected to the fuel cell 11 in series. In addition, the DC power source 10 is connected to a motor 15 through an inverter 14, and each device and the like 16, 17, 18R, 18L, 19, 21, and 22 mentioned below are connected to the DC power source 10.

The insulation type DC-DC converter 13 is configured so that a voltage is variable between 0V and 16V. The insulation type DC-DC converter 13 is configured with its voltage variable so that a voltage applied to the fuel cell 11 becomes smaller when a current flowing at the fuel cell 11 becomes large and the insulation type DC-DC converter 13 can supplement the voltage lowered at the fuel cell 11. Then, voltages applied to the fuel cell 11 and the insulation type DC-DC converter 13 become stable and also electric power becomes stable.

In the DC power source 10, as shown in FIG. 2, a voltage of the secondary cell 12 is 48V and a voltage of the fuel cell 11 is 36V, so a voltage of the insulation type DC-DC converter 13 is adjusted to 12V.

Also, wheels 18R and 18L are connected to this motor 15, and a sensor 19 for detecting a rotational speed is provided on the motor 15.

Further, in the DC power source 10, an auxiliary device 22 such as light and blinker is connected to the pair of terminals 10a and 10b in parallel, and a DC-DC converter 21 is connected to this auxiliary device 22.

Also, a CPU (an abbreviation for "Central Processing Unit", hereinafter referred to as the same) 16 is provided and a command of the CPU 16 is sent to an insulation type DC-DC converter 13 and the DC-DC converter 21. The CPU 16 is capable of receiving sent signals from an accelerator 17 and the sensor 19, and also capable of receiving a voltage value and a current value detected about the DC power source 10.

The same reference numerals are given for the other items same as the DC power source 1 in embodiment 1, and explanations will not be repeated. Also, actions and effects produced in the insulation type DC-DC converter 13 are the same as in the DC power source 1 in embodiment 1.

### Embodiment 3

Hereinafter, embodiment 3 will be described.

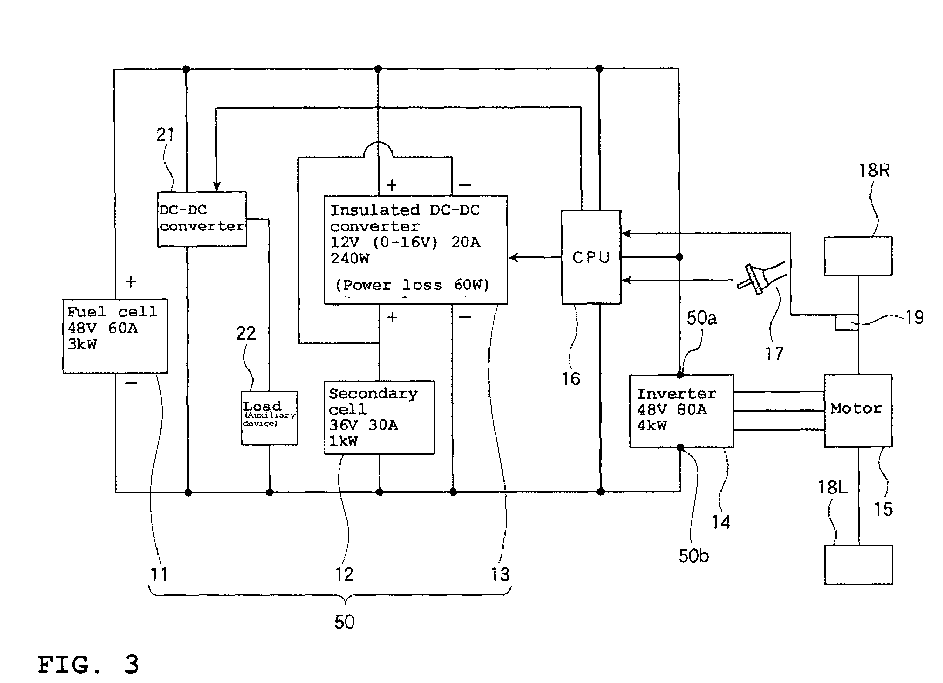

FIG. 3 shows embodiment 3.

The difference of a DC power source 50 in embodiment 3 from the DC power source 10 in embodiment 2 is the point that the arrangement of the fuel cell 11 and the secondary cell 12 is switched. Thus, in this case, a "first cell" is the secondary cell 12 and a "second cell" is the fuel cell 11. In addition, the reference numerals 50a and 50b are a pair of terminals of the DC power source 50.

The same reference numerals are given for the other items same as the DC power source 10 in embodiment 2, and explanations will not be repeated. Also, actions and effects produced in the insulation type DC-DC converter 13 are the same as in the DC power source 10 in embodiment 2.

### Embodiment 4

Hereinafter, embodiment 4 is described.

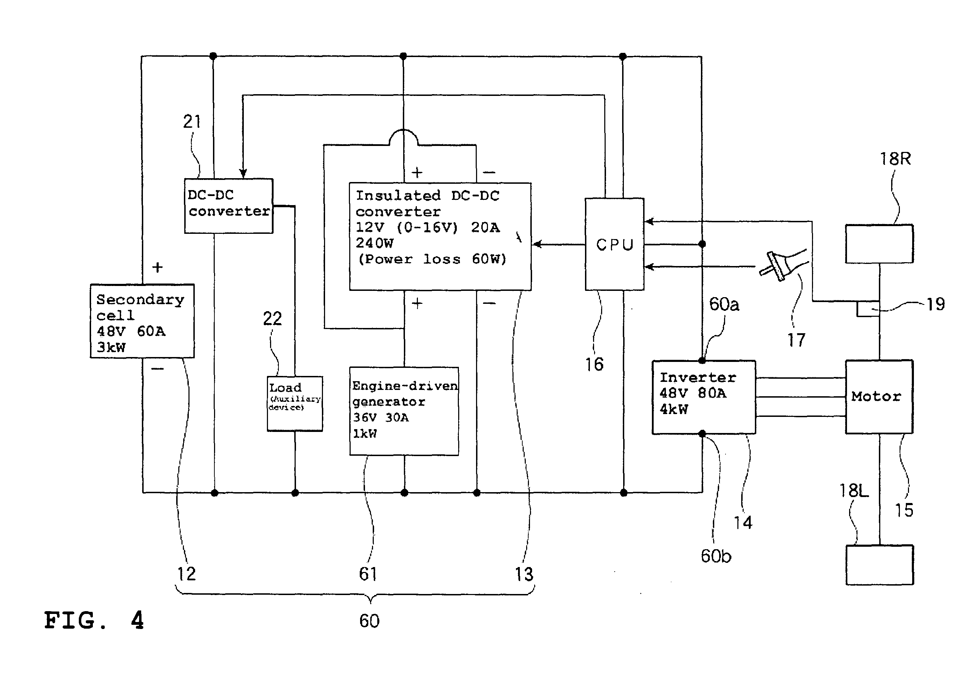

FIG. 4 shows embodiment 4.

The difference of a DC power source 60 in embodiment 4 from the DC power source 10 in embodiment 2 is the point that an engine driven type generator 61 is provided instead of the fuel cell 11 in the DC power source 10. Thus, in this case, a "first cell" is the engine driven type generator 61 and a "second cell" is the secondary cell 12. In addition, the reference numerals 60a and 60b are a pair of terminals in the DC power source 60.

With such the DC power source 60, the efficiency that the electric power produced at the engine driven type generator 61 and the secondary cell 12 is utilized as the DC power source 60 becomes high. Thus, the output efficiency of the DC power source 60 with a combined use of the engine driven type generator 61 and the secondary cell 12 is improved.

The same reference numerals are given for the other items same as the DC power source 10 in embodiment 2, and explanations will not be repeated. Also, actions and effects produced in the insulation type DC-DC converter 13 are the same as in the DC power source 10 in embodiment 2.

### Embodiment 5

Hereinafter, embodiment 5 will be described.

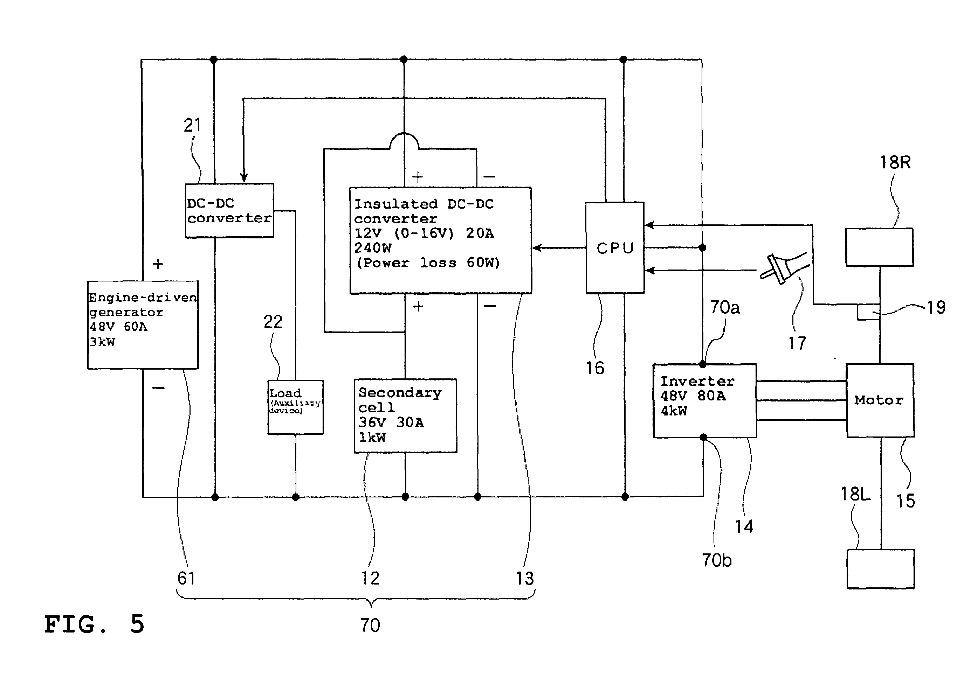

FIG. 5 shows embodiment 5.

The difference of a DC power source 70 in embodiment 5 from the DC power source 60 in embodiment 4 is the point that the arrangement of the engine driven type generator 61 and the secondary cell 12 is switched. Thus, in this case, a "first cell" is the secondary cell 12 and a "second cell" is the engine driven type generator 61. In addition, the reference numeral 70a and 70b are a pair of the terminals in the DC power source 70.

The same reference numerals are given for the other items same as the DC power source 60 in embodiment 4, and explanations will not be repeated. Also, actions and effects produced in the insulation type DC-DC converter 13 are the same as in the DC power source 10 in embodiment 4.

### Embodiment 6

Hereinafter, embodiment 6 will be described.

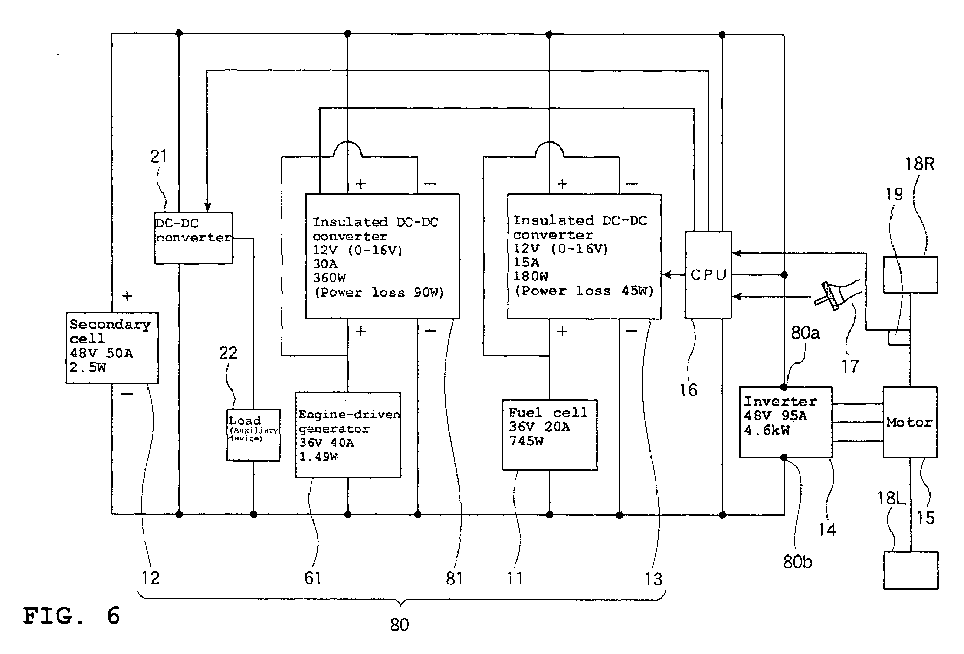

FIG. 6 shows embodiment 6.

The difference of a DC power source 80 in embodiment 3 from the DC power source 10 in embodiment 2 is the point that the fuel cell 11 and the secondary cell 12 are connected to a pair of terminals 80a and 80b in parallel and, in addition to that, the engine driven type generator 61 is connected in parallel. Also, an insulation type DC-DC converter 81 is connected to the engine driven type generator 61 in series.

The same reference numerals are given for the other items same as the DC power source 10 in embodiment 2, and explanations will not be repeated.

The case that approximately 4.6kW power is inverted by the inverter 14 with a voltage of 48V and a current of 95A and transmitted to the motor 15 is described below.

That is, approximately 745W power is produced with a voltage of 36V and a current of 20A at the fuel cell 11, and, combining with the insulation type DC-DC converter 13, and the net power source can be assumed to be approximately 700W with a voltage of 48V and a current of 15A.

Also, at the secondary cell 12, approximately 2.5kW power is produced with a voltage of 48V and a current of 50A.

In addition, at the engine driven type generator 61, approximately 1.49kW power is produced with a voltage of 36V and a current of 40A, and, combining with the insulation type DC-DC converter 81, the net power source can be assumed to be approximately 1.4kW with a voltage of 48V and a current of 30A.

However, assuming that the efficiency of the insulation type DC-DC converters 13 and 81 is 80%, a power loss at the insulation type DC-DC converter13 is approximately 45W and a power loss at the insulation type DC-DC converter 81 is approximately 90W. To output a power of 4.6kW to the inverter 14, the fuel cell 11 needs to supplement the power loss of approximately 45W at the insulation type DC-DC converter 13, and the engine driven type generator 61 needs to supplement the power loss of approximately 90W at the insulation type DC-DC converter 81.

In such the DC power source 80, all the fuel cell 11, the secondary cell 12 and the engine driven type generator 61 are connected to the pair of terminals 80a and 80b in parallel, and each insulation type DC-DC converter 13 and 81 are individually connected to the fuel cell 11 and the engine driven type generator 61 that are any two among the fuel cell 11, the secondary cell 12 and the engine driven type generator 61 in series. Therefore, power output from the two insulation type DC-DC converters 13 and 81 can be made smaller, so output power can be made smaller. Thus, the output power loss at the two insulation type DC-DC converters 13 and 81 can be reduced.

Also, in such DC power sources 10, 50, 60, 70, and 80, the motor 15 is connected to the DC power sources 10, 50, 60, 70, and 80 through the inverter 14. Thus, the motor 15 can be driven efficiently with the DC power sources 10, 50, 60, 70, and 80 with less power loss.

In addition, the DC power sources 10, 50, 60, 70, and 80 in embodiments 1 through 6 is connected to the motor 15 configuring a "drive unit" or a part of "drive unit" through the inverter. However, the application is not limited to the embodiments described above. The present teaching is applicable to a "drive unit" as a driving part of vehicles and so forth including the motor 15, a "drive unit" as vehicles and the like including this driven part, and other devices that is not including the motor 15.

To solve the aforementioned problems, the description above discloses amongst others an embodiment of a DC power source including a pair of terminals for outputting electric power, a first cell and a second cell connected to the pair of terminals in parallel, and an insulation type converter connected to either one of the first cell or second cell in series.

This embodiment includes a pair of terminals for outputting electric power, a first cell and a second cell connected to a pair of terminals in parallel, and an insulation type DC-DC converter connected to either one of the first cell or the second cell in series. Therefore, because a voltage output by an insulation type DC-DC converter can be made lower, output power can be made smaller. Thus, a power loss at the DC-DC converter can be reduced.

In addition to the configuration according to the above embodiment, the first cell might be a fuel cell, and the second cell might be a secondary cell.

In this embodiment, a fuel cell and a secondary cell are used as a first cell and a second cell, respectively. Therefore, the efficiency that the electric power produced at the fuel cell and the secondary cell is used as a DC power source becomes high. Thus, the output efficiency of the power source with a combined use of the fuel cell and the secondary cell is improved.

In addition to the configuration according to the above embodiments, the first cell might be an engine driven type generator, and the second cell might be a secondary cell.

In this embodiment, an engine driven type generator and a secondary cell are used as a first cell and second cell, respectively, Therefore, the efficiency that the electric power produced at the engine driven type generator and the secondary cell is utilized as a load for a DC power source becomes high. Thus, the output efficiency of the DC power source with a combined use of the engine driven type generator and the secondary cell is improved.

The description above discloses a further embodiment of a DC power source wherein a pair of terminals for outputting electric power is provided, a fuel cell, a secondary cell and an engine driven type generator are connected to the pair of terminals all in parallel, and each insulation type DC-DC converter is individually connected to any two of the fuel cell, the secondary cell or the engine driven type generator in series.

In this embodiment, a fuel cell, a secondary cell and an engine driven type generator are connected to a pair of terminals for outputting power all in parallel, and each insulation type DC-DC converter is individually connected to any two of a fuel cell, a secondary cell or an engine driven type generator. Therefore, the power applied to the two insulation type DC-DC converters can be made smaller. Thus, the power loss at the two insulation type DC-DC converters can be reduced.

Additionally, there is disclosed an embodiment of a drive unit connected to the DC power source according to any one of the above embodiments via an inverter.

In this embodiment, a drive unit connected to any one of the above DC power source via an inverter is configured. Thus, the drive unit obtain an efficient driving power because of the DC power source with less power loss.

The description above discloses, in order to provide a DC power source including insulation type DC-DC converters and a plurality of cells and capable of reducing an amount of power loss at an insulation type DC-DC converter, an embodiment of a DC power source 10 being provided with a pair of terminals 10a and 10b for outputting electric power, a fuel cell 11 and a secondary cell 12 connected to the pair of terminals in parallel, an insulation type DC-DC converter 13 connected to either one of the fuel cell 11 or the secondary cell 12 in series.

The description above discloses as a preferred first aspect, a DC power source comprising: a pair of terminals for outputting electric power; a first cell and a second cell connected to the pair of terminals in parallel; and an insulation type DC-DC converter connected to either one of the first cell or the second cell in series.

Further, according to a preferred second aspect, the first cell is a fuel cell and the second cell is a secondary cell.

Further, according to a preferred third aspect, the first cell is an engine driven type generator and the second cell is a secondary cell.

Further, according to a preferred fourth aspect, there is disclosed, a DC power source, wherein a pair of terminals for outputting electric power is provided; a fuel cell, a secondary cell and an engine driven type generator are connected to the pair of terminals all in parallel; and each insulation type DC-DC converter is individually connected to any two of the fuel cell, the secondary cell or the engine driven type generator in series.

Further, according to a preferred fifth aspect, a drive unit is connected to any of the above DC power sources via an inverter.

## Claims

1. DC power source comprising
a pair of terminals (1a, 1 b) for outputting electric power,
a first cell and a second cell, which are connected to the pair of terminals (1a, 1 b) in parallel, and
an insulation type DC-DC converter (13) connected to either one of the first cell or the second cell in series.

2. DC power source according to claim 1, wherein the insulation type DC-DC converter (13) is connected to either cell between the first and second cells having the lower current.

3. DC power source according to claim 1 or 2, wherein the first cell is a fuel cell (11) and the second cell is a secondary cell (12).

4. DC power source according to claim 1 or 2, wherein the first cell is an engine driven type generator and the second cell is a secondary cell.

5. DC power source according to claim 1, comprising a pair of terminals for outputting electric power,
a fuel cell, a secondary cell, and an engine driven type generator, which are connected to the pair of terminals all in parallel, and
two insulation type DC-DC converters being individually connected to any two out of the fuel cell, the secondary cell or the engine driven type generator in series.

6. DC power source according to claim 5, wherein the insulation type DC-DC converters are individually connected to the fuel cell and the engine driven type generator having the lower current compared to the secondary cell.

7. Drive unit connected to the DC power source according to any one of claim 1 through 6 via an inverter.
